(19) Europäisches Patentamt

European Patent Office

Office européen des brevets

(11) Veröffentlichungsnummer: **0 188 771**
**A2**

(12) **EUROPÄISCHE PATENTANMELDUNG**

(21) Anmeldenummer: 85116223.0

(22) Anmeldetag: 19.12.85

(51) Int. Cl.⁴: **G01D 5/16**

(30) Priorität: 24.12.84 DE 3447313

(43) Veröffentlichungstag der Anmeldung:
30.07.86 Patentblatt 86/31

(84) Benannte Vertragsstaaten:
AT CH DE FR GB IT LI SE

(71) Anmelder: **Standard Elektrik Lorenz
Aktiengesellschaft
Lorenzstrasse 10
D-7000 Stuttgart 40(DE)**
Anmelder: **International Standard Electric
Corporation
320 Park Avenue
New York New York 10022(US)**

(72) Erfinder: **Heck, Wolfgang
Ludwigstrasse 20
D-7016 Gerlingen(DE)**
Erfinder: **Kersten, Peter, Dr.
Neuköliner Strasse 8
D-7250 Leonberg(DE)**
Erfinder: **Volz, Hans, Dr.
Liegnitzer Strasse 4
D-7141 Schwieberdingen(DE)**

(74) Vertreter: **Pohl, Heribert, Dipl.-Ing et al
Standard Elektrik Lorenz AG Patent- und
Lizenzwesen Kurze Strasse 8 Postfach 300 929
D-7000 Stuttgart 30(DE)**

(54) **Magnetfeldsensor.**

㉗ Bei einem Magnetfeldsensor mit wenigstens einem auf einem ebenen Träger aufgebrachten streifenförmigen magnetfeldabhängigen Widerstand sind zwecks Erhöhung des Auflösungsvermögens und zur Ermöglichung einer Miniaturisierung des Magnetfeldsensors erfindungsgemäß n • 2 mit n = 1, 2, 3... eng benachbarte parallele magnetfeldabhängige Widerstände (2 bis 9) vorgesehen und je zwei (2, 3; 4, 5; 6, 7; 8, 9) an den einen Enden (11) elektrisch miteinander verbunden und bilden ein Widerstandspaar und an den anderen Enden (16) sind Anschlußelektroden (17 bis 21) vorgesehen, und die magnetfeldabhängigen Widerstände (2 bis 9) bestehen aus einem ferromagnetischen Material und sind in einer Dicke von maximal 0,5μm auf den Träger aufgebracht und derart durch ein Magnetfeld behandelt, daß sie eine einachsige Anisotropie mit der leichten Richtung parallel zur Streifenlängsrichtung (10) und damit eine nichtlineare Kennlinie $R_M$ = f(H) besitzen, wobei $R_M$ der magnetische Widerstand und H ein diesen beeinflussendes veränderbares Magnetfeld senkrecht zur Streifenlängsrichtung (10) und in der Ebene der magnetfeldabhängigen Widerstände (2 bis 9) bzw. des Trägers (1) bedeutet.

Fig.1

## Magnetfeldsensor

Die vorliegende Erfindung bezieht sich auf einen Magnetfeldsensor gemäß dem Oberbegriff des Anspruchs 1.

Bei einem derartigen aus der DE-OS 24 26 420 bekannten Magnetfeldsensor sind zwei streifenförmige magnetfeldabhängige Halbleiterwiderstände zusammenhängend in Streifenrichtung nebeneinander auf der Polfläche eines Magneten angeordnet. Ein zweiter Streifen aus zwei magnetfeldabhängigen Widerständen ist im Abstand und parallel zu ersterem vorgesehen. Das die magnetfeldabhängigen Halbleiterwiderstände beeinflussende veränderliche Magnetfeld ist bei einer Ausführung dort durch weichmagnetische Stege gebildet, die senkrecht oder nahezu senkrecht zu den Streifen bewegbar sind und die derart breit und schräg gestellt sind, daß der eine magnetfeldabhängige Halbleiterwiderstand jeweils immer ganz überdeckt werden kann, während der andere nicht überdeckt ist. Bei einer anderen Ausführung ist eine weichmagnetische Folie mit zwei Reihen von in gleichen Abständen voneinander angebrachten Aussparungen der Länge eines magnetfeldabhängigen Halbleiterwiderstandes versehen, wobei eine Reihe gegenüber der anderen um den halben Abstand der Aussparungen versetzt ist.

Mit der vorliegenden Erfindung soll die Aufgabe gelöst werden, einen Magnetfeldsensor der genannten Art zu - schaffen, der eine hohe Auflösung bei einfacher Herstellung ermöglicht und der für einfach herstellbare änderbare Magnetfelder, z.B. Zahnräder oder Zahnstangen, geeignet ist.

Diese Aufgabe wird erfindungsgemäß durch die im Kennzeichen des Anspruchs 1 angegebenen Merkmale gelöst. Durch die Ausbildung eines magnetfeldabhängigen Widerstandes in zwei parallele Streifen zu einem magnetfeldabhängigen Widerstandspaar erhält man ein sehr hohes Auflösungsvermögen, da die Streifen einerseits sehr schmal gehalten werden können und andererseits infolge der Nichtlinearität des Widerstandes die Wirkung unabhängig von der wirksamen Richtung des Magnetfeldes ist. Dabei kann beispielsweise die Breite der Zähne eines Zahnrades oder einer Zahnstange so bemessen werden, daß jeweils eine Zahnflanke eines Zahnes dem einen und die andere Zahnflanke dem anderen magnetfeldabhängigen Widerstand eines Widerstandspaares zugeordnet ist. Man erhält so jeweils die Reihenschaltung zweier gleichwirkender magnetfeldabhängiger Widerstände. Dadurch kann trotz kurzer Streifenlänge eines Einzelwiderstandes eine relativ hohe Meßspannung angelegt werden, so daß unter Umständen eine Verstärkerschaltung zur Verstärkung der Meßimpulse nicht erforderlich wird. Außerdem kann durch die Art der Zusammenschaltung der magnetfeldabhängigen Widerstände der Magnetfeldsensor von einer Seite aus kontaktiert werden. Hierdurch ist es möglich, den Träger in einfacher Weise in eine Gehäuse einzusetzen und eine einfache Zuleitung zu ermöglichen.

Weitere vorteilhafte Einzelheiten der Erfindung sind in den Unteransprüchen angegeben und nachfolgend anhand der in der Zeichnung veranschaulichten Ausführungsbeispiele beschrieben. Dabei zeigen:

Fig. 1 einen Magnetfeldsensor in der Draufsicht mit einem zugeordneten, ein zu detektierendes magnetfelderzeugenden Magneten und

Fig. 2 einen weiteren Magnetfeldsensor mit anderer Anordnung der Widerstandspaare.

Mit 1 ist ein Träger aus isolierendem, unmagnetischen Material bezeichnet. Es besteht beispielsweise aus Glas oder Keramik. Auf einer Seite ist er mit $n \cdot 2$ mit $n = 1, 2, 3...$ eng benachbarten parallelen Streifen von magnetfeldabhängigen Widerständen 2 bis 9 aus ferromagnetischem Material versehen. Diese bestehen z.B. aus einer Legierung von NiFe oder CoFeB oder FeB etc, die durch einen geeigneten Beschichtungsprozess, beispielsweise durch Sputtern, in einer Schichtdicke von maximal $0,5\mu$m aufgebracht ist. Während oder nach dem Beschichtungsprozess wird diese Schicht einem derartigen Magnetfeld ausgesetzt, daß die magnetfeldabhängigen Widerstände 2 bis 9 in einachsige Anisotropie mit der leichten Richtung parallel zu den Streifen aufweisen. Hierdurch ist gewährleistet, daß jede Magnetfeldkomponente H, die in Richtung senkrecht zur Streifenlängsachse 10 und in der Ebene der Streifen 2 bis 9 bzw. des Trägers 1 auftritt, eine Änderung des magnetfeldabhängigen Widerstandes $R_M$ im gleichen Sinne bewirkt. Die magnetfeldabhängigen Widerstände 2 bis 9 besitzen also eine nicht lineare Kennlinie $R_M = f(H)$.

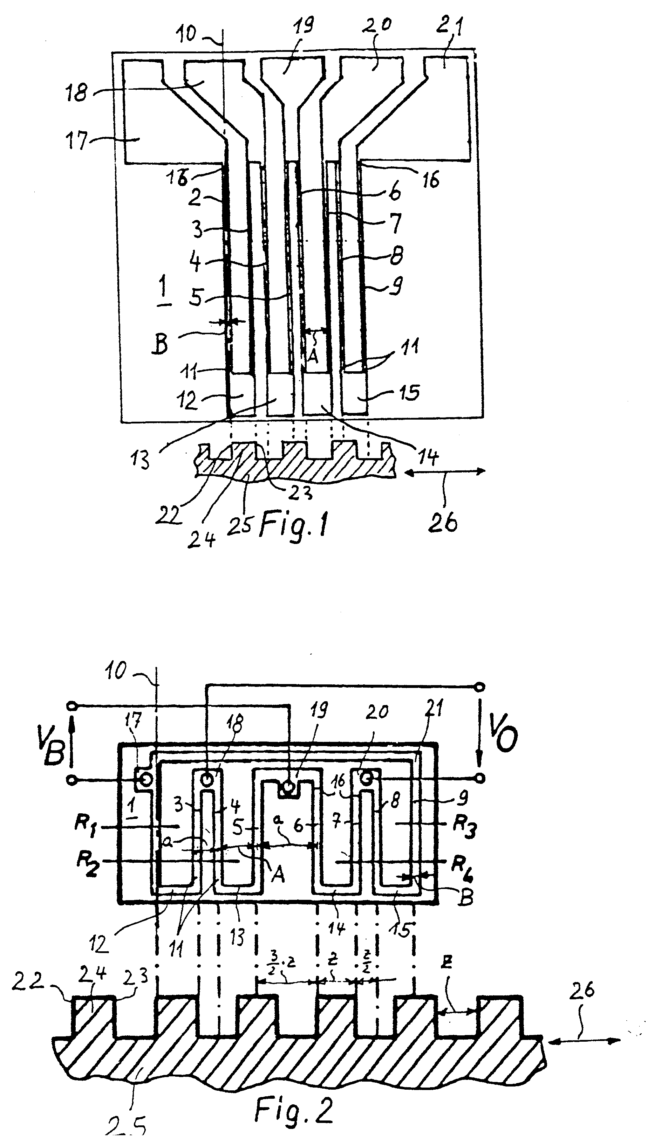

Je zwei magnetfeldabhängige Widerstände 2, 3; 4, 5; 6, 7; 8, 9 bilden ein Widerstandspaar $R_1$, $R_2$, $R_3$, $R_4$, indem sie jeweils mit ihren in der Zeichenebene unten befindlichen Enden 11 durch vorzugsweise ebenfalls auf dem Träger 1 aufgebrachte, z.B. aufgesputterte Verbindungselektroden 12 bzw. 13 bzw. 14 bzw. 15 miteinander verbunden sind. Die oberen Enden 16 der magnetfeldabhängigen Widerstände 2 bis 9 sind mit Anschlußelektroden 17 bis 21 versehen. Im Ausführungsbeispiel gemäß Fig. 1 besitzt jeder äußere magnetfeldabhängige Widerstand 2 bis 9 je eine gesonderte Anschlußelektrode 17 bzw. 21, wogegen die Anschlußelektroden 18, 19, 20 je einen magnetfeldabhängigen Widerstand 3, 5, 7 des einen magnetfeldabhängigen Widerstandspaares 2, 3; 4, 5; 6, 7; 8, 9 mit dem angrenzenden magnetfeldabhängigen Widerstand 4 bzw. 6 bzw. 8 des benachbarten magnetfeldabhängigen Widerstandspaares verbindet. Hierdurch ist es in einfacher Weise möglich, den gesamten Magnetfeldsensor an einer Seite zu kontaktieren und zugleich als Brückenschaltung beispielsweise für eine Wheatstone-Brücke zu beschalten. Bei der in Fig. 2 gezeigten Anordnung sind die Anschlußelektroden 17 und 21 bereits auf dem Träger 1 miteinander verbunden, so daß sich gleich die vier Anschlüsse für die Meßbrücke ergeben. Dabei ist an die Anschlußelektroden 17/21 und 19 die Batteriespannung $V_B$ angelegt und an den Anschlußelektroden 18 und 20 wird die erhaltene Brückenspannung $V_0$ abgenommen.

Die Breite B der magnetfeldabhängigen Widerstände 2 bis 9 beträgt vorzugsweise 0,01 bis 0,1 mm, insbesondere 0,03 bis 0,07 mm. Der Abstand A zwischen zwei magnetfeldabhängigen Widerständen 2, 3; 4, 5; 6, 7; 8, 9 beträgt vorzugsweise 0,2 bis 1 mm, insbesondere 0,5 bis 0,7 mm und entspricht erfindungsgemäß dem Abstand zweier Zahnflanken 22, 23 des Zahnes 24 eines weich- oder hartmagnetischen Zahnrades einer Zahnstange 25 mit gleicher Nut- und Zahnbreite oder einem Steg einer an sich bekannten entsprechend ausgebildeten Magnetfeld-Streufeldmaske oder einem ungeradzahligen Vielfachen davon. Die Zahnstange bzw. das Zahnrad 25 ist in den Fig. 1 und 2 um 90° geschwenkt dargestellt. Tatsächlich befindet sie bzw. es sich über den magnetfeldabhängigen Widerstandspaaren 2 bis 9 und die Dicke des Zahnrades bzw. die Breite der Zahnstange erstreckt sich zweckmäßig über die gesamte Länge der Streifen der magnetfeldabhängigen Widerstandspaare. Die möglichen Bewegungsrichtungen sind durch den Doppelpfeil 26 angedeutet.

Der Abstand a zwischen zwei angrenzenden magnetfeldabhängigen Widerständen 3, 4; 5, 6; 7, 8; benachbarter magnetfeldabhängiger Widerstandspaare beträgt vorzugsweise 0,1 bis 0,6 mm, insbesondere 0,2 bis 0,4 mm und entspricht erfindungsgemäß der halben Zahn- oder Nutbreite oder einem ungeradzahligen Vielfachen davon. Der Abstand A ist daher definiert durch die Formel $A = n \bullet z$ mit $n = 1, 3, 5...$ und $z =$ die Breite eines Zahnes oder einer gleichbreiten Nut und der Abstand $a = n \bullet \frac{z}{2}$ mit $n = 1, 3, 5...$ . Bei Einhaltung dieser Forderung können die magnetfeldabhängigen Widerstände 2 bis 9 auf einem Träger 1 unterschiedliche Abstände besitzen, wie z.B. in Fig. 2 gezeigt. Dort beträgt der Abstand a zwischen den magnetfeldabhängigen Widerständen 3 und $4 = \frac{1}{2} . z$ und derjenige zwischen den magnetfeldabhängigen Widerständen 5 und $6 = \frac{3}{2} \bullet z$.

Der elektrische Widerstand der Verbindungselektroden 2 bis 15 und der Anschlußelektroden 17 bis 21 soll möglichst niederohmig sein und soll die Widerstandsänderung der magnetfeldabhängigen Widerstände möglichst nicht beeinflussen. Dies wird durch großflächige, beispielsweise wenigstens annähernd rechteckige oder quadratische Ausbildung der Verbindungselektroden 12 bis 15 und ggf. auch der Anschlußelektroden 17 bis 21 erreicht, wobei die Breite dem Abstand der Außenkanten der beiden jeweils zu verbindenden magnetfeldabhängigen Widerstände 2, 3; 4, 5; 6, 7; 8, 9 ist. Damit auch die Anschlußelektroden 17 bis 21 bei sehr enger Benachbarung der einzelnen magnetfeldabhängigen Widerstände großflächig ausgebildet werden können, werden diese zweckmäßig von den mittleren zu den äußeren magnetfeldabhängigen Widerständen hin nach außen schräg versetzt angeordnet, wie anhand der Fig. 1 veranschaulicht. Die Verbindungselektroden 12 bis 15 und die Anschlußelektroden 17 bis 21 können vorzugsweise aus dem gleichen Material bestehen wie die magnetfeldabhängigen Widerstände 2 bis 9, so daß nur ein einziger Beschichtungsprozess notwendig ist.

**Ansprüche**

1. Magnetfeldsensor mit wenigstens einem auf einem ebenen Träger aufgebrachten streifenförmigen magnetfeldabhängigen Widerstand, **dadurch gekennzeichnet,** daß $n \bullet 2$ mit $n = 1, 2, 3 ...$ eng benachbarte parallele magnetfeldabhängige Widerstände (2 bis 9) vorgesehen sind und je zwei (2, 3; 4, 5; 6, 7; 8, 9) an den einen Enden (11) elektrisch leitend miteinander verbunden sind und ein Widerstandspaar bilden und diese an den anderen Enden (16) Anschlußelektroden (17 bis 21) aufweisen und daß die magnetfeldabhängigen Widerstände (2 bis 9) aus einem ferromagnetischen Material in einer Dicke von maximal 0,5μm bestehen, die derart durch ein Magnetfeld behandelt sind, daß sie eine einachsige Anisotropie mit der leichten Richtung parallel zu den Streifen und damit eine nichtliniare Kennlinie $R_M = f(H)$ besitzen, wobei $R_M$ der magnetische Widerstand und H ein diesen beeinflussendes veränderbares Magnetfeld senkrecht zur Streifenlängsachse (10) und in der Ebene der magnetfeldabhängigen Widerstände (2 bis 9) bzw. des Trägers (1) bedeutet.

2. Magnetfeldsensor nach Anspruch 1, dadurch gekennzeichnet, daß die magnetfeldabhängigen Widerstände (2 bis 9) eine Breite von 0,01 bis 0,1, insbesondere von 0,03 bis 0,07 mm aufweisen.

3. Magnetfeldsensor nach Anspruch 1 oder 2, dadurch gekennzeichnet, daß die beiden ein Widerstandspaar bildenden magnetfeldabhängigen Widerstände (2, 3; 4, 5; 6, 7; 8, 9) voneinander einen Abstand (A) von 0,2 bis 1 mm, insbesondere von 0,5 bis 0,7 mm aufweisen.

4. Magnetfeldsensor nach einem der Ansprüche 1 bis 3, dadurch gekennzeichnet, daß mehrere magnetfeldabhängige Widerstandspaare nebeneinander und parallel zueinander auf dem Träger (1) vorgesehen sind.

5. Magnetfeldsensor nach Anspruch 4, dadurch gekennzeichnet, daß die benachbarten magnetfeldabhängigen Widerstände (3, 4; 5, 6; 7, 8) zweier benachbarter magnetfeldabhängiger Widerstandspaare (2, 3; 4, 5; 6, 7; 8, 9) einen Abstand (a) von 0,1 bis 0,6 mm, insbesondere von 0,2 bis 0,4 mm aufweisen.

6. Magnetfeldsensor nach einem der Ansprüche 1 bis 5, dadurch gekennzeichnet, daß der Abstand (A) zweier magnetfeldabhängiger Widerstände eines Widerstandspaares doppelt so groß ist wie der Abstand (a) der benachbarten magnetfeldabhängigen Widerstände zweier aneinander grenzender Widerstandspaare.

7. Magnetfeldsensor nach einem der Ansprüche 1 bis 5, dadurch gekennzeichnet, daß vier magnetfeldabhängige Widerstandspaare nebeneinander angeordnet sind.

8. Magnetfeldsensor nach einem der Ansprüche 1 bis 7, dadurch gekennzeichnet, daß der Abstand (A) der magnetfeldabhängigen Widerstände eines magnetfeldabhängigen Widerstandspaares $= n \bullet z$ und der Abstand (a) der magnetfeldabhängigen Widerstände angrenzender magnetfeldabhängiger Widerstandspaare $= n \bullet 2 \frac{z}{2}$ ist, mit $n = 1, 3, 5, ...$ und wobei z die Breite eines Zahnes oder einer zugeordneten gleichbreiten Nut eines Zahnrades oder einer Zahnstange (25) aus weich- oder hartmagnetischem Material oder einer entsprechenden Magnetfeld-Streufeldmaske bedeutet.

9. Magnetfeldsensor nach einem der Ansprüche 1 bis 8, dadurch gekennzeichnet, daß die einen Enden (11) eines magnetfeldabhängigen Widerstandspaares (2, 3; 4, 5; 6, 7; 8, 9) über eine auf dem Träger (1) aufgebrachte gemeinsame Verbindungselektrode (12 bzw. 13 bzw. 14 bzw. 15) verbunden sind.

10. Magnetfeldsensor nach Anspruch 9, dadurch gekennzeichnet, daß die Verbindungselektroden (12 bis 15) zumindest annähernd rechteckig oder quadratisch ausgebildet sind und die Breite der Verbindungselektroden (12 bis 15) dem Abstand der Außenkanten der zwei magnetfeldabhängigen Widerstände (2, 3; 4, 5; 6, 7; 8, 9) eines magnetfeldabhängigen Widerstandspaares entspricht.

11. Magnetfeldsensor nach einem der Ansprüche 1 bis 10, dadurch gekennzeichnet, daß die Anschlußelektroden (17 bis 21) von den mittleren magnetfeldabhängigen Widerständen (5, 6) aus zu den jeweils äußeren magnetfeldabhängigen Widerständen hin schräg nach außen versetzt verlaufen.

12. Magnetfeldsensor nach einem der Ansprüche 1 bis 11, dadurch gekennzeichnet, daß die Verbindungselektroden (12 bis 15) aus dem gleichen Material bestehen wie die magnetfeldabhängigen Widerstände (2 bis 9).

13. Magnetfeldsensor nach einem der Ansprüche 1 bis 12, dadurch gekennzeichnet, daß die Anschlußelektroden (17 bis 21) aus dem gleichen Material bestehen wie die magnetfeldabhängigen Widerstände (2 bis 9).

Fig.1

Fig.2